# EUROPEAN PATENT SPECIFICATION

(11) **EP 2 751 219 B1**
(45) Date of publication and mention of the grant of the patent: **07.11.2018**
(21) Application number: 12750599.8
(22) Date of filing: 27.08.2012
(51) Int. Cl.: C09K 8/584, B01F 17/00

(54) **COMPOSITION AND METHOD FOR ENHANCED HYDROCARBON RECOVERY**
ZUSAMMENSETZUNG UND VERFAHREN ZUR VERBESSERTEN GEWINNUNG VON KOHLENWASSERSTOFFEN
COMPOSITION ET PROCÉDÉ DE RÉCUPÉRATION AMÉLIORÉE D'HYDROCARBURES

(30) Priority: 31.08.2011 EP 11179439
(43) Date of publication of application: 09.07.2014
(73) Proprietor: Shell Internationale Research Maatschappij B.V., 2596 HR The Hague (NL)
(72) Inventor: BARNES, Julian Richard, NL-1031 HW Amsterdam (NL); DOLL, Michael Joseph, Katy, Texas 77449 (US); GROEN, Khrystyna, NL-1031 HW Amsterdam (NL); ON, Quoc An, NL-1031 HW Amsterdam (NL); SEMPLE, Thomas Carl, Friendswood, Texas 77546 (US)
(74) Representative: Shell Legal Services IP
(86) International application number: PCT/EP2012/066569
(87) International publication number: WO 2013/030140

(56) References cited:
- WO-A1-2011/098493
- US-A- 4 733 728
- US-A- 4 852 653
- US-A1- 2008 171 672
- US-A1- 2010 282 467

## Description

The present invention relates to a hydrocarbon recovery composition comprising an internal olefin sulfonate (IOS) as anionic surfactant and to a process for treating a hydrocarbon containing formation using said hydrocarbon recovery composition.

Hydrocarbons, such as oil, may be recovered from hydrocarbon containing formations (or reservoirs) by penetrating the formation with one or more wells, which may allow the hydrocarbons to flow to the surface. A hydrocarbon containing formation may have a natural energy source (for example gas, water) to aid in mobilising hydrocarbons to the surface of the wells. For example, water or gas may be present in the formation at sufficient levels to exert pressure on the hydrocarbons to mobilise them to the surface of the production wells. However, reservoir conditions (for example permeability, hydrocarbon concentration, porosity, temperature, pressure) can significantly impact the economic viability of hydrocarbon production from any particular hydrocarbon containing formation. Furthermore, any natural energy sources that exist may become depleted over time, often long before the majority of hydrocarbons have been extracted from the reservoir. Therefore, supplemental recovery processes may be required and used to continue the recovery of hydrocarbons from the hydrocarbon containing formation. Examples of known supplemental processes include waterflooding, polymer flooding, gas flooding, alkali flooding, thermal processes, solution flooding or combinations thereof.

The objective of methods of chemical Enhanced Oil Recovery (cEOR) is to maximise the yield of hydrocarbons from a subterranean reservoir. In surfactant cEOR the mobilisation of residual oil saturation is achieved through surfactants which generate a sufficiently (ultra) low crude oil / water interfacial tension (IFT) to give a capillary number large enough to overcome capillary forces and allow the oil to flow (Chatzis & Morrows, "Correlation of capillary number relationship for sandstone", SPE Journal, volume 29, pages 555-562, 1989). However, different reservoirs can have very different characteristics (for example crude oil type, temperature, water composition - salinity, hardness etc.), and therefore, it is desirable that the structures and properties of the added surfactant(s) be matched to the particular conditions of a reservoir to achieve the required low IFT. In addition, other important criteria must be fulfilled, such as low rock retention or adsorption, compatibility with polymer, thermal and hydrolytic stability and acceptable cost (including ease of commercial scale manufacture).

Surfactants for enhanced hydrocarbon recovery are normally provided to the hydrocarbon containing formation by admixing it with water and/or brine which may originate from the formation from which hydrocarbons are to be recovered, thereby forming a fluid that can be injected into the hydrocarbon containing formation. The surfactant amount in such injectable water containing fluid is generally in the range of from 0.1 to 1 wt.%. See for example "Favorable Attributes of Alkaline-Surfactant-Polymer Flooding", Liu et al., SPE Journal, March 2008, pages 5-16.

Compositions and methods for cEOR are described in US3943160, US3946812, US4077471, US4216079, US5318709, US5723423, US6022834, US6269881, "Low Surfactant Concentration Enhanced Waterflooding", Wellington et al., Society of Petroleum Engineers, 1995, and "Identification and Evaluation of High Performance EOR Surfactants", Levitt et al., SPE 100089, 2006, pages 1-11.

Compositions and methods for cEOR utilising an internal olefin sulfonate (IOS) as surfactant are described in US4597879, US4979564, US5068043 and "Field Test of Cosurfactant-enhanced Alkaline Flooding", Falls et al., Society of Petroleum Engineers Reservoir Engineering, 1994.

As mentioned above, different crude oil-bearing formations or reservoirs differ from each other in terms of crude oil type. Different crude oils comprise varying amounts of saturates, aromatics, resins and asphaltenes. Said 4 components are commonly abbreviated as "SARA". Further, crude oils comprise varying amounts of acidic and basic components, including naphthenic acids and basic nitrogen compounds. These components are present in heavy (low API) crude oils and light (high API) crude oils. The overall distribution of such components in a particular crude oil is a direct result of geochemical processes.

The recovery of crude oil, containing components such as the above-mentioned saturates, aromatics, resins and asphaltenes and the above-mentioned acidic and basic components, using surfactant cEOR is affected by the composition of the crude oil in question. For example, some of the said oil components may work as natural surfactants which would affect the performance of the (surfactant) chemicals added in surfactant cEOR. Therefore, the structure and properties of a surfactant, such as an IOS, as used in surfactant cEOR need to be matched to the crude oil type in question to achieve a low IFT.

Such need for matching is also recognized in WO2011005746. In WO2011005746, a specific IOS containing hydrocarbon recovery composition is provided for use in a method of treating a formation containing crude oil with specific solubility groups and chemical families. According to WO2011005746, the latter crude oil has an asphaltenes to resins weight ratio of at most about 0.5, a saturates to aromatics weight ratio of at most about 0.7 and a naphthenic acids concentration of at most about 1900 ppm. The hydrocarbon recovery composition of WO2011005746 comprises a C₂₄-₂₈ IOS. According to WO2011005746, the latter C₂₄-₂₈ IOS has an average carbon number of from 24.5 to 27, at least 40 wt.% containing 24-28 carbon atoms.

In Example 1 of above-mentioned WO2011005746, it is stated that said C₂₄-₂₈ IOS is less compatible with crude oils with lower asphaltenes to resins ratios, higher saturates to aromatics ratios and higher naphthenic acids concentration and is more compatible with the crude oils with higher asphaltenes to resins ratios, lower saturates to aromatics ratios and lower naphthenic acids concentration. The document WO 2011/098493 discloses the use of internal olefin sulfonates for the recovery of oil. The sulfonates have an average number of branches of at least 0.6 per molecule.

The objective of the present invention is to provide a hydrocarbon recovery composition, comprising an IOS as anionic surfactant, which is suitable to be used in surfactant cEOR in a method of treating a hydrocarbon containing formation, such as a crude oil-bearing formation wherein the crude oil has a relatively low content of asphaltenes.

Surprisingly it was found that the above-mentioned objective is met by using a hydrocarbon recovery composition comprising an IOS which has a weight ratio of branched IOS molecules to linear IOS molecules which is of from 0.1:99.9 to 8:92, wherein the average carbon number for the IOS is 17 to 26, wherein the branching index of the IOS is of from 0.01 to 0.5, and wherein the IOS comprises from 40% to 95% hydroxyalkane sulfonate molecules, from 5% to 50% alkene sulfonate molecules from 0% to 10% di-sulfonate molecules.

Accordingly, the present invention relates to a method of treating a hydrocarbon containing formation, wherein the hydrocarbon containing formation is a crude oil-bearing formation wherein the amount of asphaltenes in the crude oil is of from 0.001 to 6 wt.%, based on total crude oil composition, comprising:
(a) providing a composition to at least a portion of the hydrocarbon containing formation, wherein the composition comprises water and an anionic surfactant which is an internal olefin sulfonate (IOS), which has a weight ratio of branched IOS molecules to linear IOS molecules which is of from 0.1:99.9 to 8:92, wherein the average carbon number for the IOS is 17 to 26, wherein the branching index of the IOS is of from 0.01 to 0.5, wherein the branching index is the total number of branches divided by the total number of molecules, and wherein the IOS comprises from 40% to 95% hydroxyalkane sulfonate molecules, from 5% to 50% alkene sulfonate molecules and from 0% to 10% di-sulfonate molecules; and
(b) allowing the composition to interact with the hydrocarbons in the hydrocarbon containing formation.

Further, the present invention relates to a hydrocarbon recovery composition which comprises the composition as described above and as further described below.

Still further, a hydrocarbon containing composition produced from a hydrocarbon containing formation, is described which in addition to hydrocarbons contains the composition as described above and as further described below. Preferably, said hydrocarbon containing composition has been produced by means of the method as described above and as further described below.

Thus, in the present invention, the IOS from the hydrocarbon recovery composition is relatively low branched in that the weight ratio of branched IOS molecules to linear IOS molecules is relatively small, that is to say at least 0.1:99.9 and at most 8:92.

WO2010129051 discloses a process for recovering oil from an oil-bearing formation comprising introducing into said formation an aqueous composition comprising at least one surfactant comprising a sulfonated derivative of one or more internal olefins, said sulfonated derivative being obtained by sulfonating a composition comprising internal olefins of the formula R¹R²C=CR³R⁴ wherein R¹, R², R³ and R⁴ are the same or different and are hydrogen or straight- or branched-chain, saturated hydrocarbyl groups and the total number of carbon atoms of R¹, R², R³ and R⁴ is 6 to 44 with the proviso that at least about 96 mole percent of R¹ and R³ are straight- or branched-chain, saturated hydrocarbyl groups and at least about 96 mole percent of R² and R⁴ are hydrogen.

More specifically, WO2010129051 discloses a composition as defined above, wherein less than about six mole percent of R¹ and R³ contain alkyl branching.

### Surfactants

In the present invention, the hydrocarbon recovery composition comprises an internal olefin sulfonate (IOS) which is an anionic surfactant. The hydrocarbon recovery composition may comprise other types of anionic surfactants, as also further described below. In addition to anionic surfactant(s), the hydrocarbon recovery composition of the present invention may comprise a non-ionic surfactant.

"Surfactant" is the shortened term for "surface-active agent", which comprises a chemical that stabilises mixtures of oil and water by reducing the interfacial tension at the interface between the oil and water molecules. Because water and oil hardly dissolve in each other, a surfactant may be added to the mixture to keep it from separating into layers. Any surfactant comprises a hydrophilic part and a hydrophobic part. When the hydrophilic part of a surfactant comprises a negatively charged group like a sulphonate, sulphate or carboxylate, the surfactant is called anionic. Further, an anionic surfactant comprises a counter cation to compensate for this negative charge.

That is to say, generally, an anionic surfactant has the following formula (I)

(I) [S^{m-}][Mⁿ⁺]ₒ

wherein S is the negatively charged portion of the anionic surfactant, M is a counter cation and the product of n and o (n*o) equals m. Said negatively charged portion S thus comprises (i) the hydrophilic part, which comprises a negatively charged group, and (ii) the hydrophobic part of the anionic surfactant.

Within the present specification, an anionic surfactant in the hydrocarbon recovery composition of the present invention may be characterised by its carbon number, number of branches and/or molecular weight. In case reference is made to an average carbon number, average number of branches and/or average molecular weight, this means that the anionic surfactant in question is a mixture of surfactant molecules with differ from each other in terms of carbon number, number of branches and/or molecular weight.

Within the present specification, said average carbon number is determined by multiplying the number of carbon atoms of each surfactant molecule or group within each surfactant molecule by the weight fraction of that molecule or group and then adding the products, resulting in a weight average carbon number. The average carbon number may be determined by NMR analysis.

Within the present specification, said average number of branches is determined by dividing the total number of branches by the total number of molecules, resulting in a "branching index" (BI). Said branching index may be determined by ¹H-NMR analysis. Further, said determination may be performed on the IOS precursor, that is to say on the olefin mixture before it is sulfonated.

When the branching index is determined by ¹H-NMR analysis, said total number of branches equals: [total number of branches on olefinic carbon atoms (olefinic branches)] + [total number of branches on aliphatic carbon atoms (aliphatic branches)]. Said total number of aliphatic branches equals the number of methine groups, which latter groups are of formula R₃CH wherein R is an alkyl group. Further, said total number of olefinic branches equals: [number of trisubstituted double bonds] + [number of vinylidene double bonds] + 2*[number of tetrasubstituted double bonds]. Formulas for said trisubstituted double bond, vinylidene double bond and tetrasubstituted double bond are shown below. In all of the below formulas, R is an alkyl group.

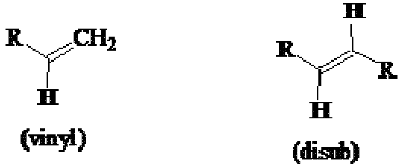

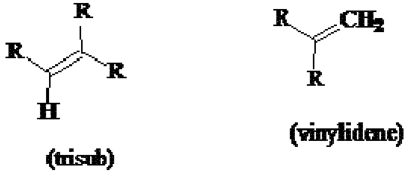

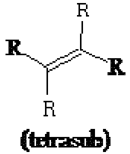

Within the present specification, said average molecular weight is determined by multiplying the molecular weight of each surfactant molecule by the weight fraction of that molecule and then adding the products, resulting in a weight average molecular weight.

### Internal olefin sulfonate (IOS) surfactant

In the present invention, the hydrocarbon recovery composition should comprise an internal olefin sulfonate (IOS) which is an anionic surfactant.

An IOS comprises a mixture of IOS molecules. That is to say, within the present specification, "IOS" or "internal olefin sulfonate" as such refers to a mixture of IOS molecules whereas "IOS molecule" or "internal olefin sulfonate molecule" refers to one of the components from such IOS.

According to the present invention, the IOS has a weight ratio of branched IOS molecules to linear IOS molecules which is greater than 0.1:99 to smaller than 11:89. Branched IOS molecules are IOS molecules derived from internal olefin molecules which comprise one or more branches. Linear IOS molecules are IOS molecules derived from internal olefin molecules which are linear, that is to say which comprise no branches (unbranched internal olefin molecules). Said weight ratio of branched IOS molecules to linear IOS molecules may be determined by gas chromatography (GC). Further, said determination may be performed on the IOS precursor, that is to say on the olefin mixture before it is sulfonated.

Preferably, said weight ratio of branched IOS molecules to linear IOS molecules is from 0.1:99.9 to 9:91, even more preferably of from 1:99 to 8:92, and most preferably of from 2:98 to 7:93.

The minimum for said weight ratio of branched IOS molecules to linear IOS molecules is 0.01:99.99, more preferably 0.1:99.9, more preferably 1:99, more preferably 2:98, more preferably 3:97, most preferably 4:96. The maximum for said weight ratio of branched IOS molecules to linear IOS molecules is 8:92, more preferably 7:93, most preferably 6:94.

Further, in the present invention, the branching index may be of from 0.01 to 0.5. Preferably, the minimum for said branching index is 0.05, most preferably 0.1.

Branches in the above-mentioned branched IOS molecules may include methyl, ethyl and/or higher molecular weight branches including propyl branches. Methyl branches may represent from 5 to 50%, more suitably from 10 to 40%, most suitably from 15 to 30%, of the total number of branches. Ethyl branches may represent from 10 to 60%, more suitably from 20 to 50%, most suitably from 25 to 40%, of the total number of branches. Other (higher molecular weight) branches other than methyl or ethyl may represent from 15 to 70%, more suitably from 30 to 60%, most suitably from 35 to 50%, of the total number of branches. Said percentages may be determined by ¹³C-NMR analysis. Further, said determination is preferably performed on the IOS precursor, that is to say on the olefin mixture before it is sulfonated.

The olefin used in making the IOS that is contained in the hydrocarbon recovery composition of the present invention is thus a mixture of branched and unbranched olefin molecules. The IOS molecule resulting from any of such olefin molecules is thus either branched or unbranched (linear).

In the present invention, the average carbon number for the IOS is at least 17, more preferably at least 18, more preferably at least 19, more preferably at least 20. Further, said average carbon number is at most 26, preferably at most 25, more preferably at most 24, more preferably at most 23, more preferably at most 22.

Further, in the present invention, the average molecular weight for the IOS is neither essential and may also vary within wide ranges, such as from 100 to 500, suitably 150 to 450, more suitably 200 to 400 g/mole, most suitably 250 to 350 g/mole.

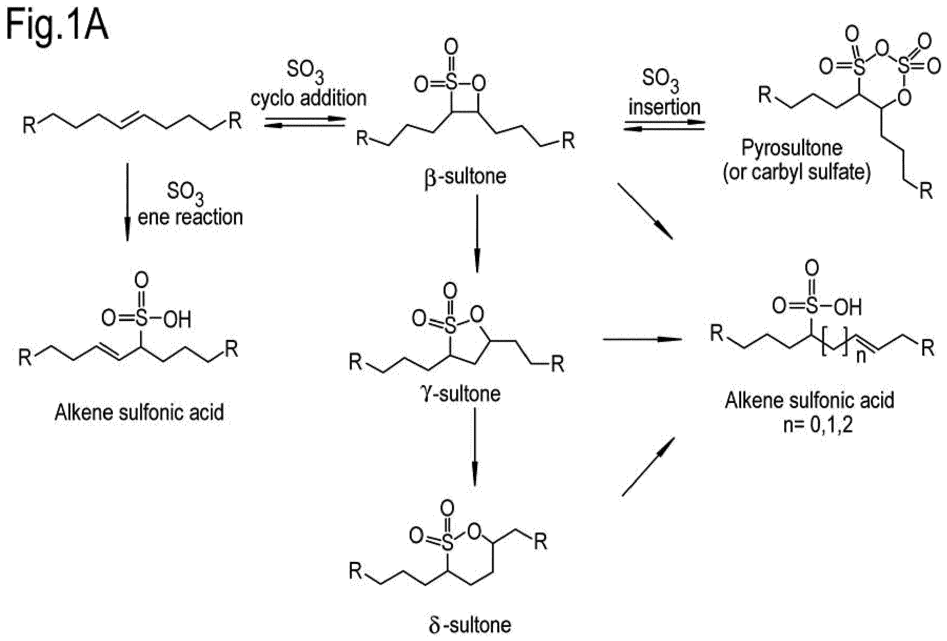

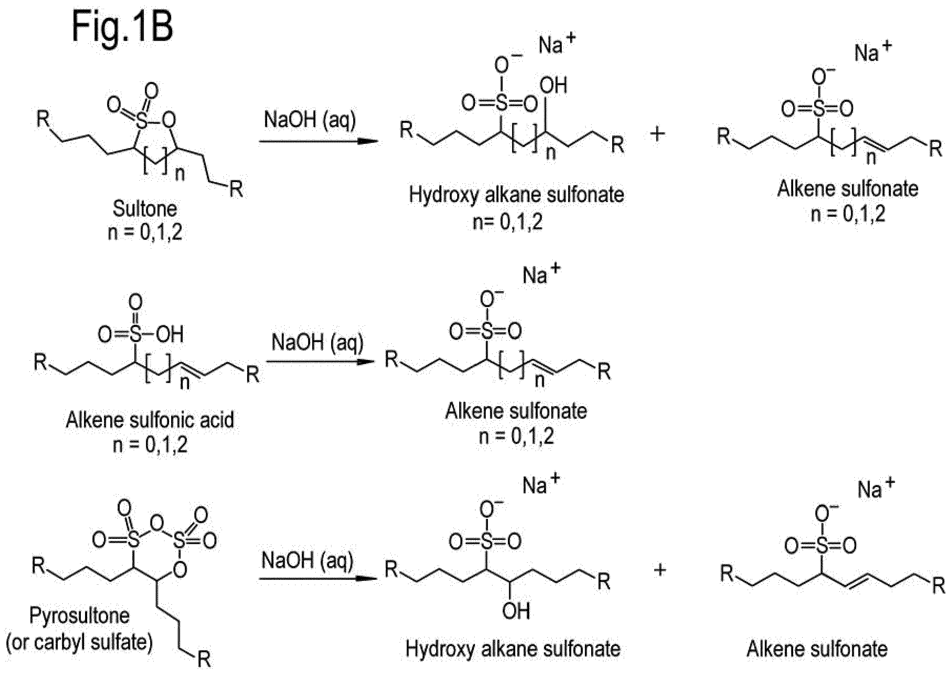

IOS manufacture comprises (a) sulfonation and (b) neutralisation and hydrolysis (Adami, "Production of linear alkylbenzene sulphonate and alpha-olefin sulphonates", Surfactant Science Series, volume 142, chapter 5, page 83). Figure 1A illustrates the reactions of an internal olefin with sulfur trioxide during the sulfonation process. Figure 1B illustrates the subsequent neutralisation and hydrolysis process to form an internal olefin sulfonate.

An IOS comprises a range of different molecules, which may differ from one another in terms of carbon number, being branched or unbranched, number of branches, molecular weight and number and distribution of functional groups such as sulfonate and hydroxyl groups. An IOS comprises both hydroxyalkane sulfonate molecules and alkene sulfonate molecules and possibly also di-sulfonate molecules. Hydroxyalkane sulfonate molecules and alkene sulfonate molecules are shown in Figure 1B. Di-sulfonate molecules (not shown in Figure 1B) originate from a further sulfonation of for example an alkene sulfonic acid as shown in Figure 1A.

The IOS comprises from 40% to 95% hydroxyalkane sulfonate molecules, from 5% to 50% alkene sulfonate molecules and from 0% to 10% di-sulfonate molecules. Beneficially, the IOS comprises from 50% to 90% hydroxyalkane sulfonate molecules, from 10% to 40% alkene sulfonate molecules and from less than 1% to 5% di-sulfonate molecules. More beneficially, the IOS comprises from 70% to 90% hydroxyalkane sulfonate molecules, from 10% to 30% alkene sulfonate molecules and less than 1% di-sulfonate molecules.

The composition of the IOS may be measured using a liquid chromatography / mass spectrometry (LC-MS) technique.

An IOS molecule is made from an internal olefin molecule whose double bond is located anywhere along the carbon chain except at a terminal carbon atom. Internal olefin molecules may be made by double bond isomerisation of alpha-olefin molecules whose double bond is located at a terminal position. Generally, such isomerisation results in a mixture of internal olefin molecules whose double bonds are located at different internal positions. The mixture that results from such preparation may also comprise a minor amount of alpha-olefins, for example up to 5%, suitably up to 3%.

Suitable processes for making internal olefins include those described in US5510306, US5633422, US5648584, US5648585, US5849960, EP0830315B1 and "Anionic Surfactants: Organic Chemistry", Surfactant Science Series, volume 56, Chapter 7, Marcel Dekker, Inc., New York, 1996, ed. H.W. Stacke.

In sulfonation, a sulfonating agent is reacted with internal olefins leading to the formation of cyclic intermediates known as beta-sultones, which can undergo isomerisation to unsaturated sulfonic acids and the more stable gamma- and delta-sultones. The mole ratio of sulfonating agent to internal olefin may be 0.5:1 to 2:1, suitably 1:1 to 1.6:1. The sulfonating agent may be sulfur trioxide, sulfuric acid or oleum.

Sulfur trioxide is preferably diluted with a stream of nitrogen, air or any other inert gas into the reactor. The concentration of sulfur trioxide generally is between 2 and 5 percent by volume based on the volume of the carrier gas. The sulfonation reaction with SO₃ is preferably carried out in a film reactor, for example a "falling film reactor", where the olefin feed is continuously fed onto the inside surfaces of a tube and gaseous SO₃ is fed into the tube to react with the (falling) olefin film in a controlled manner. The reactor is cooled with a cooling means, which is preferably water, having a temperature preferably not exceeding 90 °C, especially a temperature in the range of from 20 to 50 °C, for example by flowing the cooling means at the outside walls of the reactor.

The sulfonation process may be carried out batchwise, semi-continuously or continuously. Preferably, the obtained reaction product is directly, without extracting the unreacted internal olefin, subjected to neutralisation and hydrolysis using a neutralisation agent. Said neutralisation agent may be a water soluble base, which is preferably selected from the group consisting of hydroxides, carbonates and bicarbonates of an (earth) alkali metal ion, such as sodium or potassium, or of ammonium ion, and amine compounds. Suitable examples are sodium hydroxide and sodium carbonate. The neutralisation is generally carried out with excessive base, calculated on the acid component.

Depending on the circumstances, part of the beta-sultones may be first converted into gamma-sultones which in turn may be converted into delta-sultones. Upon neutralisation and hydrolysis, beta-sultones give beta-hydroxyalkane sulfonates, whereas said gamma- and delta-sultones give gamma-hydroxyalkane sulfonates and delta-hydroxyalkane sulfonates, respectively. Part of said hydroxyalkane sulfonates may be dehydrated into alkene sulfonates.

The sulfonation reaction mixture may be fed to a neutralisation unit and then to a separate hydrolysis unit. Generally, neutralisation in the neutralisation unit is carried out at a temperature in the range of from 0 to 80 °C. Hydrolysis in the hydrolysis unit may be carried out at an elevated temperature in the range of from 100 to 250 °C, preferably 130 to 200 °C. The hydrolysis time generally may be from 5 minutes to 4 hours.

During neutralisation and hydrolysis, a non-ionic surfactant may be added as a process aid.

US4183867, US4248793 and EP0351928B1 disclose processes which can be used to make the internal olefin sulfonates that can be used in the present invention as the anionic surfactant. Further, internal olefin sulfonates may be synthesised in a way as described by Van Os et al. in "Anionic Surfactants: Organic Chemistry", Surfactant Science Series 56, ed. Stacke H.W., 1996, Chapter 7: Olefin sulfonates, page 363.

### Anionic co-surfactant

As mentioned above, in the present invention, the hydrocarbon recovery composition may comprise other types of anionic surfactants in addition to the above-described IOS surfactant. Such anionic co-surfactant may be an anionic surfactant based on an alkoxylated or non-alkoxylated, preferably alkoxylated, alcohol having an aliphatic group. Said alcohol may be primary or secondary, preferably primary. Said anionic surfactant may be of the following formula (II)

(II) [R-O-[R'-O]ₓ-A^{m-}][Mⁿ⁺]ₒ

wherein R is the aliphatic group originating from the alcohol, R'-O is an alkylene oxide group originating from the alkylene oxide, x is 0 or at least 0.5, preferably at least 0.5, A is a negatively charged group, M is a counter cation and the product of n and o (n*o) equals m.

In above exemplary formula (II), m and n are integers. m may be 1, 2 or 3. Further, o may be any number which ensures that the anionic surfactant is electrically neutral. That is to say, the product of n and o (n*o) should equal m. o may be a number in the range of from 0.5 to 3.

The counter cation, denoted as Mⁿ⁺ in above exemplary formula (II), may be an organic cation, such as a nitrogen containing cation, for example an ammonium cation which may be unsubstituted or substituted. Further, the counter cation may be a metal cation, such as an alkali metal cation or an alkaline earth metal cation. Preferably, such alkali metal cation is lithium cation, sodium cation or potassium cation. Further, preferably, such alkaline earth metal cation is magnesium cation or calcium cation.

The anionic surfactant of above exemplary formula (II) comprises a range of different molecules which may differ from one another in terms of carbon number for the aliphatic group R, the aliphatic group R being branched or unbranched, number of branches for the aliphatic group R, nature and number of alkylene oxide groups R'-O, and molecular weight. Thus, the anionic surfactant of above exemplary formula (II) comprises a mixture of surfactant molecules. That is to say, within the present specification, "surfactant" as such refers to a mixture of surfactant molecules whereas "surfactant molecule" refers to one of the components from such surfactant.

In the present invention, the average carbon number for the aliphatic group R from the optional anionic surfactant of above exemplary formula (II) is not essential and may vary within wide ranges, such as from 5 to 25, suitably 5 to 20, more suitably 8 to 18, most suitably 11 to 15.

Preferably, in the present invention, the weight ratio of branched surfactant molecules to linear surfactant molecules for the optional anionic surfactant of above exemplary formula (II), is of from 50:50 to 99:1, more preferably of from 60:40 to 96:4, even more preferably of from 70:30 to 93:7, and most preferably of from 80:20 to 90:10. Said branched surfactant molecules are surfactant molecules derived from alcohol molecules of formula R-OH wherein the aliphatic group R comprises one or more branches. Linear surfactant molecules are surfactant molecules derived from alcohol molecules of formula R-OH which are linear, that is to say wherein the aliphatic group R comprises no branches (unbranched alcohol molecules of formula R-OH).

Further, in the present invention, the branching index for the aliphatic group R from the optional anionic surfactant of above exemplary formula (II) may be of from 0.5 to 3.0, more suitably 0.6 to 2.5, more suitably 0.7 to 2.0, more suitably 0.8 to 1.6, most suitably 0.9 to 1.3.

Branches in the above-mentioned branched surfactant molecules may include methyl and/or ethyl branches. Methyl branches may represent from 20 to 99%, more suitably from 50 to 99%, most suitably from 65 to 95%, of the total number of branches. Ethyl branches may represent less than 30%, more suitably from 1 to 30%, most suitably from 1 to 20% of the total number of branches. Branches other than methyl or ethyl, may represent less than 10%, more suitably less than 0.5%, of the total number of branches. Preferably, more than 99%, most preferably more than 99.5%, of the total number of branches consists of methyl and ethyl branches.

The alkylene oxide groups R'-O in above exemplary formula (II) may comprise any alkylene oxide groups. For example, said alkylene oxide groups may comprise ethylene oxide groups, propylene oxide groups and butylene oxide groups or a mixture thereof, such as a mixture of ethylene oxide and propylene oxide groups. In case of a mixture of ethylene oxide and propylene oxide groups, the mixture may be random or blockwise. Preferably, said alkylene oxide groups consist of propylene oxide groups.

In above exemplary formula (II), x represents the number of alkylene oxide groups R'-O. In the present invention, for the optional anionic surfactant of above exemplary formula (II), the average value for x may be 0 or at least 0.5. In case said average value for x is at least 0.5, it may be of from 1 to 20, more suitably 4 to 16, more suitably 6 to 13, most suitably 7 to 11.

The negatively charged group, denoted as A^{m-} in above exemplary formula (II), may be any negatively charged group.

Said negatively charged group is preferably a group comprising the -SO₃⁻ moiety. The -SO₃⁻ moiety is preferably attached directly to the alkylene oxide portion of the anionic surfactant, as shown in below exemplary formula (III) which falls under above exemplary formula (II):

(III) [R-O[R'-O]ₓ-SO₃⁻][Mⁿ⁺]ₒ

Such surfactant is herein referred to as a sulfate surfactant in view of the presence of an -O-SO₃⁻ moiety.

Further, said -SO₃⁻ moiety may be attached indirectly to the alkylene oxide portion of the anionic surfactant via an intermediate alkyl group, suitably a C₁-C₄ alkyl group, wherein the -SO₃⁻ moiety is not attached to an oxygen atom but to a carbon atom of said alkyl group, as shown in below exemplary formula (IV) which falls under above exemplary formula (II):

(IV) [R-O-[R'-O]ₓ-L-SO₃⁻][Mⁿ⁺]ₒ

wherein L is an alkyl group, suitably a C₁-C₄ alkyl group, which may be unsubstituted or substituted. Such surfactant is herein referred to as a sulfonate surfactant in view of the presence of a -C-SO₃⁻ moiety. An example of such -L-SO₃⁻ moiety is a glycidyl sulfonate moiety as represented by the formula -CH₂CH(OH)CH₂-SO₃⁻.

Further, said negatively charged group may be a group comprising the -C(=O)O⁻ moiety. Said -C(=O)O⁻ moiety may be attached either directly or indirectly to the alkylene oxide portion of the anionic surfactant. An example of such anionic surfactant comprising the -C(=O)O⁻ moiety, herein referred to as a carboxylate surfactant, is a surfactant of below exemplary formula (V) which falls under above exemplary formula (II):

(V) [R-O-[R'-O]ₓ-L-C(=O)O⁻[Mⁿ⁺]ₒ

wherein L is either absent, in which case "-L-" represents a single bond, or is an alkyl group, suitably a C₁-C₄ alkyl group, which may be unsubstituted or substituted.

A primary aliphatic alcohol, from which the above-mentioned anionic co-surfactant, based on an alkoxylated or non-alkoxylated alcohol having an aliphatic group, may originate, may be prepared by hydroformylation of a branched olefin. Preparations of branched olefins are described in US5510306, US5648584 and US5648585. Preparations of branched long chain aliphatic alcohols are described in US5849960, US6150222, US6222077.

The above-mentioned primary alcohol may be alkoxylated by reacting with alkylene oxide in the presence of an appropriate alkoxylation catalyst. The alkoxylation catalyst may be potassium hydroxide or sodium hydroxide which is commonly used commercially. Alternatively, a double metal cyanide catalyst may be used, as described in US6977236. Still further, a lanthanum-based or a rare earth metal-based alkoxylation catalyst may be used, as described in US5059719 and US5057627. The alkoxylation reaction temperature may range from 90°C to 250°C, suitably 120 to 220°C, and super atmospheric pressures may be used if it is desired to maintain the primary alcohol substantially in the liquid state.

The alkoxylation procedure serves to introduce a desired average number of alkylene oxide units per mole of primary alcohol alkoxylate. For example, treatment of a primary alcohol with 2 moles of alkylene oxide per mole of primary alcohol serves to effect the alkoxylation of each alcohol molecule with 2 alkylene oxide groups, although a substantial proportion of primary alcohol will have become combined with more than 2 alkylene oxide groups and an approximately equal proportion will have become combined with less than 2. In a typical alkoxylation product mixture, there is also a minor proportion of unreacted primary alcohol.

As mentioned above, a negatively charged group, such as a sulfate group, may be attached to the primary alcohol alkoxylate. This is demonstrated below, by way of example only, with reference to a sulfate anionic surfactant.

The primary alcohol alkoxylate may be sulfated using one of a number of sulfating agents including sulfur trioxide, complexes of sulfur trioxide with (Lewis) bases, such as the sulfur trioxide pyridine complex and the sulfur trioxide trimethylamine complex, chlorosulfonic acid and sulfamic acid. The sulfation may be carried out at a temperature preferably not above 80°C. The sulfation may be carried out at temperature as low as -20°C, but higher temperatures are more economical. For example, the sulfation may be carried out at a temperature from 20 to 70°C, preferably from 20 to 60°C, and more preferably from 20 to 50°C.

The primary alcohol alkoxylates may be reacted with a gas mixture which in addition to at least one inert gas contains from 1 to 8 vol.%, relative to the gas mixture, of gaseous sulfur trioxide, preferably from 1.5 to 5 vol.%. Although other inert gases are also suitable, air or nitrogen are preferred, as a rule because of easy availability.

The reaction of the primary alcohol alkoxylate with the sulfur trioxide containing inert gas may be carried out in falling film reactors. Such reactors utilize a liquid film trickling in a thin layer on a cooled wall which is brought into contact in a continuous current with the gas. Kettle cascades, for example, would be suitable as possible reactors. Other reactors include stirred tank reactors, which may be employed if the sulfation is carried out using sulfamic acid or a complex of sulfur trioxide and a (Lewis) base, such as the sulfur trioxide pyridine complex or the sulfur trioxide trimethylamine complex.

Following sulfation, the liquid reaction mixture may be neutralized using an aqueous alkali metal hydroxide, such as sodium hydroxide or potassium hydroxide, an aqueous alkaline earth metal hydroxide, such as magnesium hydroxide or calcium hydroxide, or bases such as ammonium hydroxide, substituted ammonium hydroxide, sodium carbonate or potassium hydrogen carbonate. The neutralization procedure may be carried out over a wide range of temperatures and pressures. For example, the neutralization procedure may be carried out at a temperature from 0°C to 65°C and a pressure in the range from 100 to 200 kPa abs.

In the present invention, in case a co-surfactant as described above is used, the weight ratio of the IOS surfactant to the co-surfactant is preferably from 1:1 to 10:1, more preferably 2:1 to 8:1, more preferably 2:1 to 6:1, most preferably 3:1 to 5:1. In general, said weight ratio may be fine-tuned depending on the specific conditions of a specific hydrocarbon containing formation.

### Co-solvent

Generally, solvents, such as sec-butanol, isopropanol, tert-amyl alcohol and others, also referred to as "co-solvents", are added to hydrocarbon recovery compositions in order to improve the water solubility of the surfactants under the conditions at the surface and to reduce the viscosity of the fluid under the surface.

Likewise, the hydrocarbon recovery composition of the present invention may comprise a co-solvent. Suitable co-solvents include low molecular weight alcohols and other organic solvents or combinations thereof.

Suitable low molecular weight alcohols for use as co-solvent in said hydrocarbon recovery composition include C₁-C₁₀ alkyl alcohols, more suitably C₁-C₈ alkyl alcohols, most suitably C₁-C₆ alkyl alcohols, or combinations thereof. Examples of suitable C₁-C₄ alkyl alcohols are methanol, ethanol, 1-propanol, 2-propanol (isopropyl alcohol), 1-butanol, 2-butanol (sec-butyl alcohol), 2-methyl-1-propanol (iso-butyl alcohol) and 2-methyl-2-propanol (tert-butyl alcohol). Examples of suitable C₅ alkyl alcohols are 1-pentanol, 2-pentanol and 3-pentanol, and branched C₅ alkyl alcohols, such as 2-methyl-2-butanol (tert-amyl alcohol). Examples of suitable C₆ alkyl alcohols are 1-hexanol, 2-hexanol and 3-hexanol, and branched C₆ alkyl alcohols

Suitable other organic solvents for use as co-solvent in said hydrocarbon recovery composition include methyl ethyl ketone, acetone, lower alkyl cellosolves, lower alkyl carbitols or combinations thereof.

Further, the hydrocarbon recovery composition of the present invention may comprise one or more compounds which under the conditions in a hydrocarbon containing formation may be converted into any of the above-mentioned co-colvents, such as one or more of the above-mentioned low molecular weight alcohols. Such precursor co-solvent compounds may include ether compounds, such as ethylene glycol monobutyl ether (EGBE), diethylene glycol monobutyl ether (DGBE) and triethylene glycol monobutyl ether (TGBE). The latter 3 ether compounds may be converted under the conditions in a hydrocarbon containing formation into ethanol and 1-butanol.

In the present invention, in case a co-solvent as described above is used, the weight ratio of the co-solvent to the IOS surfactant is suitably of from 0.01:1 to 10:1, more suitably 0.1:1 to 5:1, more suitably 0.3:1 to 3:1, more suitably 0.5:1 to 2.8:1, most suitably 1.5:1 to 2.5:1. In general, said weight ratio may be fine-tuned depending on the specific conditions of a specific hydrocarbon containing formation.

### Alkaline agent

It is preferred that, in addition to the IOS surfactant, the hydrocarbon recovery composition of the present invention comprises an alkaline agent. The main function of an alkaline agent in a hydrocarbon recovery composition is to lower rock retention or adsorption.

Within the present specification, an "alkaline agent" refers to a basic, ionic salt of an alkali metal or alkaline earth metal, preferably an alkali metal, which salt is a base that dissolves in water yielding a solution having a pH greater than 7. Alkaline agents are also commonly referred to as alkalis or alkali agents.

In the preferred embodiment of the present invention where an alkaline agent is used in addition to the IOS surfactant, any alkaline agent known to the skilled person may be used.

A preferred alkaline agent that may be used in the present invention is an alkaline agent which is selected from the group consisting of alkali metal carbonate salts, alkali metal bicarbonate salts, alkali metal hydroxide salts, alkali metal silicate salts and alkali metal phosphate salts. The alkali metal counter cation in said salts may be sodium, potassium, lithium or cesium. More preferably, said counter cation is sodium or potassium, most preferably sodium.

Within the present specification, "silicate" covers orthosilicates, pyrosilicates, polysilicates and metasilicates. Preferably, the silicate is an orthosilicate, such as sodium silicate, or a metasilicate, such as sodium metasilicate.

Within the present specification, "phosphate" covers orthophosphates, pyrophosphates, polyphosphates and metaphosphates. Preferably, the phosphate is a polyphosphate. Suitable examples of polyphosphates are triphosphates and higher phosphates, such as pentasodium triphosphate.

More preferably, the alkaline agent is an alkaline agent which is selected from the group consisting of alkali metal carbonate salts, alkali metal bicarbonate salts and alkali metal hydroxide salts. Suitable examples of alkali metal hydroxide salts are sodium hydroxide and potassium hydroxide. Even more preferably, the alkaline agent is an alkali metal carbonate salt or an alkali metal bicarbonate salt. Suitable examples of alkali metal bicarbonate salts are sodium bicarbonate and potassium bicarbonate. Most preferably, the alkaline agent is an alkali metal carbonate salt, suitably sodium carbonate or potassium carbonate, more suitably sodium carbonate.

In the present invention, in case an alkaline agent as described above is used, the weight ratio of the alkaline agent to the IOS surfactant is preferably from 0.1:1 to 10:1, more preferably 0.5:1 to 8:1, more preferably 1:1 to 5:1, most preferably 1.5:1 to 4:1. In general, said weight ratio may be fine-tuned depending on the specific conditions of a specific hydrocarbon containing formation.

### Inorganic salt

It is preferred that, in addition to the IOS surfactant, the hydrocarbon recovery composition of the present invention comprises an inorganic salt. The inorganic salt may lower the interfacial tension between hydrocarbons to be recovered and water, as further discussed below.

Suitably, inorganic salts that may be used in the present invention are selected from the group consisting of alkali metal chlorides, alkali metal sulfates and alkali metal carbonates, wherein the alkali metal may be sodium or potassium. Specific preferred inorganic salts are selected from the group consisting of sodium chloride, potassium chloride, ammonium chloride, sodium sulfate and sodium carbonate.

### Polymer

It is preferred that, in addition to the IOS surfactant, the hydrocarbon recovery composition of the present invention comprises a polymer.

The main function of the polymer is to increase viscosity. That is, the polymer should be a viscosity increasing polymer. More in particular, in the present invention, the polymer should increase the viscosity of water for an aqueous fluid in which the hydrocarbon recovery composition of the present invention, comprising an anionic surfactant and the polymer, has been diluted which aqueous fluid may then be injected into a hydrocarbon containing formation. For production from a hydrocarbon containing formation may be enhanced by treating the hydrocarbon containing formation with a polymer that may mobilise hydrocarbons to one or more production wells. The polymer may reduce the mobility of the water phase, because of the increased viscosity, in pores of the hydrocarbon containing formation. The reduction of water mobility may allow the hydrocarbons to be more easily mobilised through the hydrocarbon containing formation.

Suitable polymers performing the above-mentioned function of increasing viscosity in enhanced oil recovery, for use in the present invention, and preparations thereof, are described in US6427268, US6439308, US5654261, US5284206, US5199490 and US5103909, and also in "Viscosity Study of Salt Tolerant Polymers", Rashidi et al., Journal of Applied Polymer Science, volume 117, pages 1551-1557, 2010.

Suitable commercially available polymers for cEOR include Flopaam® manufactured by SNF Floerger, CIBA® ALCOFLOOD® manufactured by Ciba Specialty Additives (Tarrytown, New York), Tramfloc® manufactured by Tramfloc Inc. (Temple, Arizona) and HE® polymers manufactured by Chevron Phillips Chemical Co. (The Woodlands, Texas). A specific suitable polymer commercially available at SNF Floerger is Flopaam® 3630 which is a partially hydrolysed polyacrylamide.

The nature of the polymer is not relevant in the present invention, as long as the polymer can increase viscosity. That is, the molecular weight of the polymer should be sufficiently high to increase viscosity. Suitably, the molecular weight of the polymer is at least 1 million Dalton, more suitably at least 2 million Dalton, most suitably at least 4 million Dalton. The maximum for the molecular weight of the polymer is not essential. Suitably, the molecular weight of the polymer is at most 30 million Dalton, more suitably at most 25 million Dalton.

Further, the polymer may be a homopolymer, a copolymer or a terpolymer. Still further, the polymer may be a synthetic polymer or a biopolymer or a derivative of a biopolymer. Examples of suitable biopolymers or derivatives of biopolymers include xanthan gum, guar gum and carboxymethyl cellulose.

A suitable monomer for the polymer, suitably a synthetic polymer, is an ethylenically unsaturated monomer of formula R¹R²C=CR³R⁴, wherein at least one of the R¹, R², R³ and R⁴ substituents is a substituent which contains a moiety selected from the group consisting of-C(=O)NH₂, -C(=O)OH, -C(=O)OR wherein R is a branched or linear C₆-C₁₈ alkyl group, -OH, pyrrolidone and -SO₃H (sulfonic acid), and the remaining substituent(s), if any, is (are) selected from the group consisting of hydrogen and alkyl, preferably C₁-C₄ alkyl, more preferably methyl. Most preferably, said remaining substituent(s), if any, is (are) hydrogen. Suitably, a polymer is used that is made from such ethylenically unsaturated monomer.

Suitable examples of the ethylenically unsaturated monomer as defined above, are acrylamide, acrylic acid, lauryl acrylate, vinyl alcohol, vinylpyrrolidone, and styrene sulfonic acid and 2-acrylamido-2-methylpropane sulfonic acid. Suitable examples of ethylenic homopolymers that are made from such ethylenically unsaturated monomers are polyacrylamide, polyacrylate, polylauryl acrylate, polyvinyl alcohol, polyvinylpyrrolidone, and polystyrene sulfonate and poly(2-acrylamido-2-methylpropane sulfonate). For these polymers, the counter cation for the -C(=O)O⁻ moiety (in the case of polyacrylate) and for the sulfonate moiety may be an alkali metal cation, such as a sodium ion, or an ammonium ion.

As mentioned above, copolymers or terpolymers may also be used. Examples of suitable ethylenic copolymers include copolymers of acrylic acid and acrylamide, acrylic acid and lauryl acrylate, and lauryl acrylate and acrylamide.

Preferably, the polymer which may be used in the present invention is a polyacrylamide, more preferably a partially hydrolysed polyacrylamide. A partially hydrolysed polyacrylamide contains repeating units of both -[CH₂-CHC(=O)NH₂]- and -[CH₂-CHC(=O)OM⁺]- wherein M⁺ may be an alkali metal cation, such as a sodium ion, or an ammonium ion. The extent of hydrolysis is not essential and may vary within wide ranges. For example, 1 to 99 mole%, or 5 to 95 mole%, or 10 to 90 mole%, suitably 15 to 40 mole%, more suitably 20 to 35 mole%, of the polyacrylamide may be hydrolysed.

### Oil recovery: treating a hydrocarbon containing formation with the hydrocarbon recovery composition

In the present method of treating a hydrocarbon containing formation, the hydrocarbon recovery composition as described above is provided to at least a portion of the hydrocarbon containing formation, and said composition is allowed to interact with the hydrocarbons in the hydrocarbon containing formation. Said hydrocarbon containing formation may be a crude oil-bearing formation wherein the crude oil has certain properties, as further discussed below.

As mentioned above in the introduction, different crude oils comprise varying amounts of saturates, aromatics, resins and asphaltenes (the 4 so-called "SARA" components). Further, crude oils comprise varying amounts of acidic and basic components, including naphthenic acids and basic nitrogen compounds. These crude oil components can be easily measured using conventional oilfield chemistry methods, including industry ASTM and IP (Institute of Petroleum) methods.

Said SARA components can be measured by separation on the basis of their different solubility. First, the asphaltenes may be separated by precipitation using certain alkanes. The remaining soluble SARA components may then be separated by high performance liquid chromatography or column chromatography.

Within the present specification, the term "saturates" means compounds comprising hydrocarbons which contain substantially no carbon-carbon double bonds (C=C bonds) or carbon-carbon triple bonds (C≡C bonds). Though hydrocarbons are generally defined as molecules formed primarily of carbon and hydrogen atoms, they may also include other elements, such as halogens, metallic elements, nitrogen, oxygen and/or sulfur. For example, the saturates may comprise paraffins, such as normal-paraffins (linear alkanes), iso-paraffins (branched alkanes) and cyclo-paraffins (cyclic alkanes).

Preferably, the crude oil has a relatively high content of saturates. Preferably, the amount of saturates in the crude oil is of from 30 to 70 wt.%, more preferably 40 to 65 wt.%, based on total crude oil composition.

Within the present specification, the term "aromatics" means compounds which contain one or more aromatic rings. Aromatic rings may be conjugated rings of unsaturated carbon-carbon bonds. For example, aromatics may comprise benzene and its derivatives. Benzene derivatives may contain alkyl chains and cycloalkane rings.

Preferably, the crude oil has a relatively low content of aromatics. Preferably, the amount of aromatics in the crude oil is of from 20 to 50 wt.%, more preferably 30 to 45 wt.%, based on total crude oil composition.

Likewise, preferably, the weight ratio of saturates to aromatics in the crude oil is relatively high. Preferably, said weight ratio is of from 0.6 to 3.0, more preferably 0.7 to 2.5, most preferably 0.8 to 2.0.

Within the present specification, the term "resins" means compounds which are soluble in higher molecular weight normal alkanes, such as n-heptane, and insoluble in lower molecular weight normal alkanes, such as propane.

Preferably, the crude oil has a relatively low content of resins. Preferably, the amount of resins in the crude oil is of from 3 to 12 wt.%, more preferably 4 to 11 wt.%, based on total crude oil composition.

Within the present specification, the term "asphaltenes" means compounds which are a) insoluble in light alkanes such as n-pentane or n-hexane and b) soluble in aromatic solvents such as toluene and benzene. Asphaltenes are not a specific family of chemicals with common functionality and varying molecular weight. They are a continuum of material - generally at the high end in molecular weight, polarity and aromaticity - some of which may separate as an additional solid phase in response to changes in pressure, composition, and/or temperature. Asphaltenes may comprise polycyclic aromatic clusters substituted with varying alkyl side chains with metal species and the molecular weight may be in the 500-2000 g/mole range.

Preferably, the crude oil has a relatively low content of asphaltenes. The maximum for the amount of asphaltenes in the crude oil is 6 wt.%, more preferably 4 wt.%, more preferably 3 wt.%, more preferably 2 wt.%, more preferably 1 wt.%, more preferably 0.5 wt.%, most preferably 0.3 wt.%.

The minimum for the amount of asphaltenes in the crude oil is 0.001 wt.%, more preferably 0.01 wt.%, more preferably 0.03 wt.%, more preferably 0.05 wt.%, more preferably 0.07 wt.%, more preferably 0.1 wt.%, more preferably 0.13 wt.%, most preferably 0.15 wt.%.

Likewise, preferably, the weight ratio of asphaltenes to resins in the crude oil is relatively low. Preferably, said weight ratio is of from 0.001 to 0.4, more preferably 0.005 to 0.2, most preferably 0.01 to 0.1. Preferably, the maximum for said weight ratio is 0.4, more preferably 0.3, more preferably 0.25, more preferably 0.2, more preferably 0.15, more preferably 0.1, more preferably 0.08, most preferably 0.06. Preferably, the minimum for said weight ratio is 0.0001, more preferably 0.001, more preferably 0.003, more preferably 0.005, more preferably 0.008, more preferably 0.01, more preferably 0.012, most preferably 0.015.

Within the present specification, the term "naphthenic acids" means compounds which contain one or more carboxylic acid groups. For example, naphthenic acids may comprise fatty acids. The amount of naphthenic acids in the crude oil is generally relatively low and may be of from 1,000 to 2,000 parts per million by weight (ppmw), suitably 2,000 to 4,000 ppmw, based on total crude oil composition.

Within the present specification, the term "basic nitrogen compounds" means compounds which contain one or more basic nitrogen atoms. The amount of basic nitrogen compounds in the crude oil is generally relatively low and may be of from 10 to 1,000 parts per million by weight (ppmw), suitably 30 to 300 ppmw, based on total crude oil composition.

Naphthenic acids and basic nitrogen compounds can be measured using conventional analytical techniques, such as potentiometric titrations, infrared spectroscopy and mass spectrometry.

Further, the crude oil that may be treated in the method of the present invention, may have an API ranging from less than 20 to higher than 40. Suitably, said API ranges of from 20 to 50, more suitably 25 to 45, most suitably 30 to 40.

Normally, surfactants for enhanced hydrocarbon recovery are transported to a hydrocarbon recovery location and stored at that location in the form of an aqueous solution containing for example 30 to 35 wt.% of the surfactant. At the hydrocarbon recovery location, such solution would then be further diluted to a 0.1-1 wt.% solution as also mentioned in the introductory part of this specification, before it is injected into a hydrocarbon containing formation. The amount of water in the present aqueous hydrocarbon recovery composition may vary to a great extent. Said amount of water may range from 90 to 40 wt.%, preferably 80 to 50 wt.%, more preferably 70 to 60 wt.%, based on the total amount of the composition. However, after transporting said composition to the hydrocarbon recovery location but before said composition is provided to at least a portion of the hydrocarbon containing formation, it is preferably diluted with additional water. The amount of water in the composition to be provided to at least a portion of the hydrocarbon containing formation is suitably of from 99.99 to 95 wt.%, more suitably 99.9 to 99 wt.%, based on the total amount of the composition.

By diluting the present aqueous hydrocarbon recovery composition with additional water, an aqueous fluid is formed which fluid can be injected into the hydrocarbon containing formation, that is to say an injectable fluid. The water used in such dilution suitably originates from the formation from which hydrocarbons are to be recovered. Preferably, said water is brine, which is a salt (for example NaCl) containing aqueous solution.

The amount of IOS surfactant, or the total amount of surfactants in case one or more other surfactants are used, in said injectable fluid, which is the present aqueous hydrocarbon recovery composition in diluted form, may be of from 0.05 to 2 wt.%, preferably 0.1 to 1.5 wt.%, more preferably 0.1 to 1.0 wt.%, most preferably 0.2 to 0.5 wt.%. The amount of alkali agent (if any) as described above in said injectable fluid may be of from 0.15 to 6 wt.%, preferably 0.3 to 4.5 wt.%, more preferably 0.3 to 3.0 wt.%, most preferably 0.6 to 1.5 wt.%. The amount of polymer (if any) as described above in said injectable fluid may be of from 0.05 to 2 wt.%, preferably 0.1 to 1.5 wt.%, more preferably 0.1 to 1.0 wt.%, most preferably 0.2 to 0.5 wt.%.

In the present invention, the temperature within the hydrocarbon containing formation may be between 10°C and 150°C, optionally between 30°C and 90°C. Further, in the present invention, the salinity of the water originating from the hydrocarbon containing formation may be between 0.5% and 20% or between 0.5% and 10% or between 1% and 6%.

Hydrocarbons may be produced from hydrocarbon containing formations through wells penetrating such formations. "Hydrocarbons" are generally defined as molecules formed primarily of carbon and hydrogen atoms such as oil and natural gas. Hydrocarbons may also include other elements, such as halogens, metallic elements, nitrogen, oxygen and/or sulfur. Hydrocarbons derived from a hydrocarbon containing formation may include kerogen, bitumen, pyrobitumen, asphaltenes, oils or combinations thereof. Hydrocarbons may be located within or adjacent to mineral matrices within the earth. Matrices may include sedimentary rock, sands, silicilytes, carbonates, diatomites and other porous media.

A "hydrocarbon containing formation" may include one or more hydrocarbon containing layers, one or more non-hydrocarbon containing layers, an overburden and/or an underburden. An overburden and/or an underburden includes one or more different types of impermeable materials. For example, overburden/underburden may include rock, shale, mudstone, or wet/tight carbonate (that is to say an impermeable carbonate without hydrocarbons). For example, an underburden may contain shale or mudstone. In some cases, the overburden/underburden may be somewhat permeable. For example, an underburden may be composed of a permeable mineral such as sandstone or limestone. At least a portion of a hydrocarbon containing formation may exist at less than or more than 1000 feet (305 metres) below the earth's surface.

Properties of a hydrocarbon containing formation may affect how hydrocarbons flow through an underburden/overburden to one or more production wells. Properties include porosity, permeability, pore size distribution, surface area, salinity or temperature of formation. Overburden/underburden properties in combination with hydrocarbon properties, capillary pressure (static) characteristics and relative permeability (flow) characteristics may affect mobilisation of hydrocarbons through the hydrocarbon containing formation.

Fluids (for example gas, water, hydrocarbons or combinations thereof) of different densities may exist in a hydrocarbon containing formation. A mixture of fluids in the hydrocarbon containing formation may form layers between an underburden and an overburden according to fluid density. Gas may form a top layer, hydrocarbons may form a middle layer and water may form a bottom layer in the hydrocarbon containing formation. The fluids may be present in the hydrocarbon containing formation in various amounts. Interactions between the fluids in the formation may create interfaces or boundaries between the fluids. Interfaces or boundaries between the fluids and the formation may be created through interactions between the fluids and the formation. Typically, gases do not form boundaries with other fluids in a hydrocarbon containing formation. A first boundary may form between a water layer and underburden. A second boundary may form between a water layer and a hydrocarbon layer. A third boundary may form between hydrocarbons of different densities in a hydrocarbon containing formation.

Production of fluids may perturb the interaction between fluids and between fluids and the overburden/underburden. As fluids are removed from the hydrocarbon containing formation, the different fluid layers may mix and form mixed fluid layers. The mixed fluids may have different interactions at the fluid boundaries. Depending on the interactions at the boundaries of the mixed fluids, production of hydrocarbons may become difficult.

Quantification of energy required for interactions (for example mixing) between fluids within a formation at an interface may be difficult to measure. Quantification of energy levels at an interface between fluids may be determined by generally known techniques (for example spinning drop tensiometer). Interaction energy requirements at an interface may be referred to as interfacial tension. "Interfacial tension" as used herein, refers to a surface free energy that exists between two or more fluids that exhibit a boundary. A high interfacial tension value (for example greater than 10 dynes/cm) may indicate the inability of one fluid to mix with a second fluid to form a fluid emulsion. As used herein, an "emulsion" refers to a dispersion of one immiscible fluid into a second fluid by addition of a compound that reduces the interfacial tension between the fluids to achieve stability. The inability of the fluids to mix may be due to high surface interaction energy between the two fluids. Low interfacial tension values (for example less than 1 dyne/cm) may indicate less surface interaction between the two immiscible fluids. Less surface interaction energy between two immiscible fluids may result in the mixing of the two fluids to form an emulsion. Fluids with low interfacial tension values may be mobilised to a well bore due to reduced capillary forces and subsequently produced from a hydrocarbon containing formation.

Water in a hydrocarbon containing formation may contain minerals (for example minerals containing barium, calcium, or magnesium) and mineral salts (for example sodium chloride, potassium chloride, magnesium chloride). Water salinity and/or water hardness of water in a formation may affect recovery of hydrocarbons in a hydrocarbon containing formation. As used herein "salinity" refers to an amount of dissolved solids in water. "Water hardness", as used herein, refers to a concentration of multivalent ions (for example calcium, magnesium) in the water. Water salinity and hardness may be determined by generally known methods (for example conductivity, titration). As used herein, "high salinity water" refers to water that has greater than 30,000 ppm total dissolved solids based on sodium chloride. As water salinity increases in a hydrocarbon containing formation, interfacial tensions between hydrocarbons and water may be increased and the fluids may become more difficult to produce.

Low salinity water in a hydrocarbon containing formation may enhance hydrocarbon production from a hydrocarbon containing formation. Hydrocarbons and low salinity water may form a well dispersed emulsion due to a low interfacial tension between the low salinity water and the hydrocarbons. Production of a flowable emulsion (for example hydrocarbons/water mixture) from a hydrocarbon containing formation may be more economically viable to a producer. As used herein, "low salinity water" refers to water salinity in a hydrocarbon containing formation that is less than 20,000 ppm total dissolved solids based on sodium chloride. Hydrocarbon containing formations may include water with a salinity of less than 13,000 ppm.

Initially, natural formation pressure and temperature in a hydrocarbon containing formation may be sufficient to cause hydrocarbons to flow into well bores and out to the surface. As hydrocarbons are produced from a hydrocarbon containing formation, pressures and/or temperatures within the formation may decline. Various forms of artificial lift (for example pumps, gas injection) and/or heating may be employed to continue to produce hydrocarbons from the hydrocarbon containing formation.

Mobilisation of residual hydrocarbons retained in a hydrocarbon containing formation may be difficult due to viscosity of the hydrocarbons and capillary effects of fluids in pores of the hydrocarbon containing formation. As used herein "capillary forces" refers to attractive forces between fluids and at least a portion of the hydrocarbon containing formation. Capillary forces may be overcome by increasing the pressures within a hydrocarbon containing formation. Capillary forces may also be overcome by reducing the interfacial tension between fluids in a hydrocarbon containing formation. The ability to reduce the capillary forces in a hydrocarbon containing formation may depend on a number of factors, including the temperature of the hydrocarbon containing formation, the salinity of water in the hydrocarbon containing formation, and the composition of the hydrocarbons in the hydrocarbon containing formation.

As production rates decrease, additional methods may be employed to make a hydrocarbon containing formation more economically viable. Methods may include adding sources of water (for example brine, steam), gases, polymers, monomers or any combinations thereof to the hydrocarbon containing formation to increase mobilisation of hydrocarbons.

A hydrocarbon containing formation may thus also be treated with the hydrocarbon recovery composition of the present invention, comprising an IOS surfactant, as described above. Interaction of said hydrocarbon recovery composition with the hydrocarbons may reduce the interfacial tension of the hydrocarbons with one or more fluids in the hydrocarbon containing formation. The interfacial tension between the hydrocarbons and an overburden/underburden of a hydrocarbon containing formation may be reduced. Reduction of the interfacial tension may allow at least a portion of the hydrocarbons to mobilise through the hydrocarbon containing formation.

The ability of the hydrocarbon recovery composition of the present invention, comprising an IOS surfactant, to reduce the interfacial tension of a mixture of hydrocarbons and fluids may be evaluated using known techniques. The interfacial tension value for a mixture of hydrocarbons and water may be determined using a spinning drop tensiometer. An amount of an aqueous solution comprising the solid hydrocarbon recovery composition of the present invention may be added to the hydrocarbon/water mixture and the interfacial tension value for the resulting fluid may be determined.

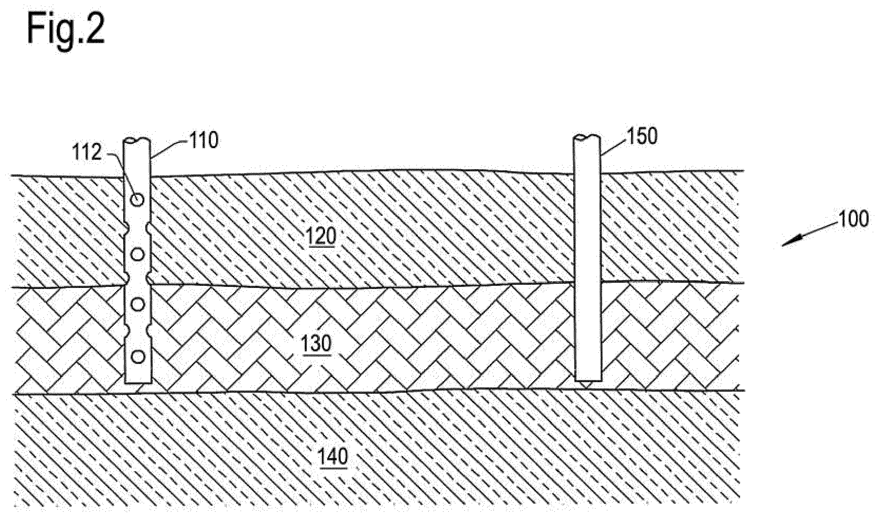

The hydrocarbon recovery composition of the present invention may be provided (for example injected in the form of a diluted aqueous fluid) into hydrocarbon containing formation 100 through injection well 110 as depicted in Figure 2. Hydrocarbon containing formation 100 may include overburden 120, hydrocarbon layer 130, and underburden 140. Injection well 110 may include openings 112 that allow fluids to flow through hydrocarbon containing formation 100 at various depth levels. Hydrocarbon layer 130 may be less than 1000 feet (305 metres) below earth's surface. Low salinity water may be present in hydrocarbon containing formation 100.

The surfactant(s) from the hydrocarbon recovery composition of the present invention may interact with at least a portion of the hydrocarbons in hydrocarbon layer 130. This interaction may reduce at least a portion of the interfacial tension between different hydrocarbons. This may also reduce at least a portion of the interfacial tension between one or more fluids (for example water, hydrocarbons) in the formation and the underburden 140, one or more fluids in the formation and the overburden 120 or combinations thereof.

The surfactant(s) from the hydrocarbon recovery composition of the present invention may interact with at least a portion of hydrocarbons and at least a portion of one or more other fluids in the formation to reduce at least a portion of the interfacial tension between the hydrocarbons and one or more fluids. Reduction of the interfacial tension may allow at least a portion of the hydrocarbons to form an emulsion with at least a portion of one or more fluids in the formation. The interfacial tension value between the hydrocarbons and one or more other fluids may be altered by the hydrocarbon recovery composition to a value of less than 0.1 dyne/cm or less than 0.05 dyne/cm or less than 0.001 dyne/cm.

At least a portion of the hydrocarbon recovery composition/hydrocarbon/fluids mixture may be mobilised to production well 150. Products obtained from the production well 150 may include components of the hydrocarbon recovery composition, methane, carbon monoxide, water, hydrocarbons, ammonia, asphaltenes or combinations thereof. Hydrocarbon production from hydrocarbon containing formation 100 may be increased by greater than 50% after the present hydrocarbon recovery composition has been added to a hydrocarbon containing formation.

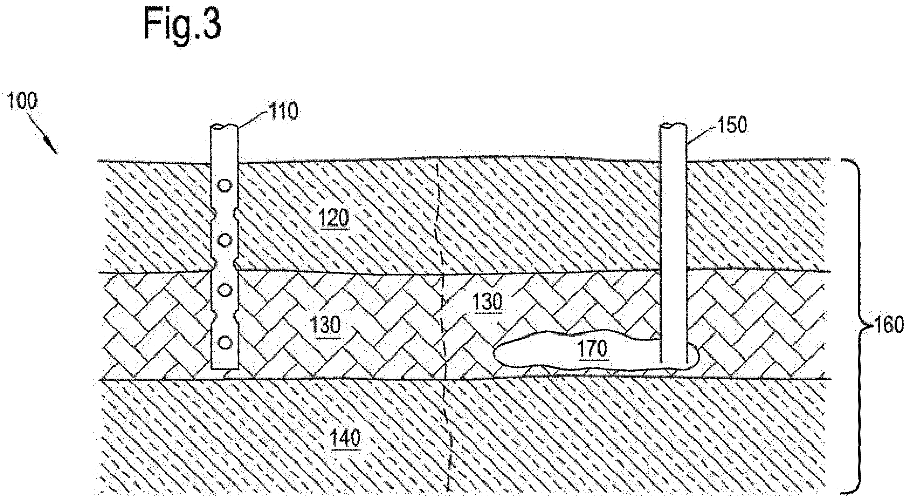

The hydrocarbon recovery composition of the present invention, diluted or not diluted, may also be injected into hydrocarbon containing formation 100 through injection well 110 as depicted in Figure 3. Interaction of the surfactant(s) from the hydrocarbon recovery composition with hydrocarbons in the formation may reduce at least a portion of the interfacial tension between the hydrocarbons and underburden 140. Reduction of at least a portion of the interfacial tension may mobilise at least a portion of hydrocarbons to a selected section 160 in hydrocarbon containing formation 100 to form hydrocarbon pool 170. At least a portion of the hydrocarbons may be produced from hydrocarbon pool 170 in the selected section of hydrocarbon containing formation 100.

It may be beneficial under certain circumstances that an aqueous fluid, wherein the hydrocarbon recovery composition of the present invention is diluted, contains an inorganic salt, such as sodium chloride, potassium chloride, ammonium chloride, sodium sulfate or sodium carbonate. Such inorganic salt may be added separately from the hydrocarbon recovery composition of the present invention or, as discussed above, it may be included in the hydrocarbon recovery composition of the present invention before it is diluted in water. The addition of the inorganic salt may help the fluid disperse throughout a hydrocarbon/water mixture. This enhanced dispersion may decrease the interactions between the hydrocarbon and water interface. The decreased interaction may lower the interfacial tension of the mixture and provide a fluid that is more mobile.

The invention is further illustrated by the following Examples.

### Examples

### 1. Chemicals used in the Examples

### 1.1 IOS surfactants A and B

In the Examples and Comparison Examples, 2 different internal olefin sulfonate (IOS) surfactants were used, designated as Surfactant A and Comparison Surfactant B, respectively.

Surfactant A was an IOS surfactant which originated from a mixture of C20-24 internal olefins which was a mixture of only even carbon number olefins and had an average carbon number of 20.8. Less than 6% of the total internal olefins were C18 and lower internal olefins, 62% were C20, 28% were C22, 4% were C24 and less than 2% were C26 and higher.

Comparison Surfactant B was an IOS surfactant which originated from a mixture of C20-24 internal olefins which was a mixture of only even carbon number olefins and had an average carbon number of 20.7. Less than 2% of the total internal olefins were C18 and lower internal olefins, 69% were C20, 23% were C22, 5% were C24 and less than 2% were C26 and higher.

Both Surfactant A and Comparison Surfactant B were sodium salts. Further properties for said 2 surfactants are mentioned in the table below. The main difference lies in the weight ratio of branched IOS molecules to linear IOS molecules. For Surfactant A said weight ratio was 5:95 whereas it was 11:89 for Comparison Surfactant B.

| | Surfactant A | Comparison Surfactant B |
|---|---|---|
| *Properties of olefins used in IOS preparation* | | |
| Weight ratio branched: linear⁽¹⁾ | 5:95 | 11:89 |
| Branching index⁽²⁾ | 0.2 | 0.3 |
| Weight average carbon number | 20.8 | 20.7 |
| Weight average molecular weight (g/mole) | 291.3 | 290.2 |
| Percent of methyl branches⁽³⁾ | 22.8 | 17.4 |
| Percent of ethyl branches⁽³⁾ | 33.2 | 5.3 |
| Percent of C2+ branches⁽³⁾ | 43.9 | 77.3 |
| *Composition of IOS* | | |
| Hydroxyalkane sulfonates (%) | 83.8 | 76.9 |
| Alkene sulfonates (%) | 16.0 | 23.0 |
| Di-sulfonates (%) | 0.1 | 0.1 |
| *Components other than IOS* | | |
| Free oil (wt.%)⁽⁴⁾ | 10.0 | 17.3 |
| NEODOL™ 91-8 (non-ionic surfactant) ⁽⁴⁾ | 5.0 | 5.0 |
| Na₂SO₄ (wt.%) ⁽⁴⁾ | 6.1 | 8.3 |

| | | |
|---|---|---|
| (1) Determined by GC. (2) Determined by ¹H-NMR. (3) Relative to total number of branches. Determined by ¹³C-NMR. (4) Relative to IOS. | | |

Hereinbelow, a description of preparing Surfactant A and Comparison Surfactant B is given. The internal olefins from which these surfactants were derived, were prepared by double bond isomerisation of alpha-olefins. Conditions for the isomerisation are mentioned in the below table.

| *Isomerisation conditions* | Internal olefin Surfactant A | Internal olefin Comparison Surfactant B |
|---|---|---|
| Step 1: Drying | Over molecular sieves in 1^{st} plug flow reactor; WHSV = 10; T = 75-125 °C; P = atmospheric | |
| Step 2: Purification | Over alumina extrudates in 2^{nd} plug flow reactor; WHSV = 1; T = 75-125 °C; P = atmospheric | |
| Step 3: Isomerisation | In 3^{rd} plug flow reactor with fixed catalyst bed; WHSV = 3-10; T = 100-140 °C; P = atmospheric | |
| Catalyst in step 3 | potassium carbonate supported on alumina | palladium on alumina |

The internal olefins thus obtained were sulfonated in a mono-tube falling film reactor applying the procedure as outlined in the below table.

| *Sulfonation conditions* | Surfactant A and Comparison Surfactant B |
|---|---|
| Sulfonating agent | SO₃ (5% in air) |
| Molar ratio SO₃:olefin in feed | 1.06 |
| Cooling water temperature | about 30 °C |
| Neutralisation | T = 50 °C; 5% NEODOL™ 91-8 (non-ionic surfactant) |
| Hydrolysis | T = 170 °C; residence time = 1 hour |

The obtained Surfactant A containing aqueous solution had an active matter content of 30.9 wt.%. The obtained Comparison Surfactant B containing aqueous solution had an active matter content of 26.1 wt.%. "Active matter" herein means all matter excluding water from said aqueous solutions.

### 1.2 Alcohol propoxy sulfate Surfactant C

Surfactant C was an anionic co-surfactant of the following formula (VI):

(VI) [R-O-[R'-O]ₓ-SO₃⁻][Na⁺]

The R-O moiety in the surfactant of above formula (VI) originated from a blend of primary alcohols of formula R-OH, wherein R was an aliphatic group, said blend comprising less than 1 wt.% of C₁₁ and lower alcohols, 50 wt.% of C₁₂ alcohol, 48 wt.% of C₁₃ alcohol and less than 2 wt.% of C₁₄ and higher alcohols. The weight average carbon number for the aliphatic group R was about 12.6. Further, the branching index for the aliphatic group R was about 1.1. The weight ratio of branched to linear was 85:15. The aliphatic group R was randomly branched. The branches consisted of 87% of methyl branches and 13% of ethyl branches.

The R'-O moiety in the surfactant of above formula (VI) originated from propylene oxide. x, which represents the average number of moles of alkylene oxide groups per mole of alcohol, was 9.

### 1.3 Co-solvent

In cases where a co-solvent was used, it was 2-methyl-1-propanol (iso-butyl alcohol, hereinafter abbreviated as "IBA").

### 2. Crude oils used in the Examples

Five crude oils were used in the Examples, designated as W, X1, X2, Y and Z. Crude oils X1 and X2 were from the same oil reservoir but from different years and from different wells. Crude oils W, X1/X2, Y and Z were from reservoirs from different regions of the world. Oil properties and oil components for said crude oils are shown in the below table.

| Crude oil | W | X1 | X2 | Y | Z |
|---|---|---|---|---|---|
| API gravity | 30.0 | 33.1 | 38.1 | 35.0 | 26.5 |
| Density, g/cm³ | 0.8689 | 0.8150 | 0.8130 | n.d. | n.d. |
| TAN, mg KOH/g oil | 0.01 | 0.2 | 0.1 | 0.2 | 0.1 |
| a: resins, wt.% | 3.8 | 7.8 | 10.2 | 5.0 | 13.6 |
| b: asphaltenes, wt. % | 0.1 | 0.2 | 0.2 | 0.2 | 6.6 |
| Weight ratio b/a | 0.03 | 0.03 | 0.02 | 0.04 | 0.49 |
| x: saturates, wt.% | 59.1 | 45.6 | 57.5 | 60.1 | 27.5 |
| y: aromatics, wt.% | 37.0 | 46.0 | 32.1 | 34.7 | 52.3 |
| Weight ratio x/y | 1.6 | 1.0 | 1.8 | 1.7 | 0.5 |
| Napthenic acids, ppmw | 112 | 3,230 | 3,010 | n.d. | 1,600 |
| Basic nitrogen compounds, ppmw | n.d. | 80 | n.d. | 162 | 490 |

| | | | | | |
|---|---|---|---|---|---|
| n.d. = not determined | | | | | |

According to their API gravity (American Petroleum Institute gravity), all crude oils W, X1, X2, Y and Z can be classified as "light" crude oils. Further, the TAN (Total Acid Number) is relatively low for all said crude oils.

Crude oils W, X1, X2 and Y differ from crude oil Z in that the amounts of resins and the amounts of asphaltenes are lower for crude oils W, X1, X2 and Y than for crude oil Z. Further, the weight ratio of asphaltenes to resins is lower for crude oils W, X1, X2 and Y than for crude oil Z.

Further, crude oils W, X1, X2 and Y differ from crude oil Z in that the amounts of saturates and the amounts of aromatics are higher and lower, respectively, for crude oils W, X1, X2 and Y than for crude oil Z. Accordingly, the weight ratio of saturates to aromatics is higher for crude oils W, X1, X2 and Y than for crude oil Z.

### 3. Evaluation tests

Evaluated properties of surfactant compositions were microemulsion phase behaviour and aqueous solubility. The tests used to assess these properties are described hereinbelow.

### 3.1 Microemulsion phase behaviour

Aqueous solutions comprising the surfactant composition and having different salinities were prepared. In tubes, the aqueous solutions were mixed with crude oil in a volume ratio of 1:1.

In general, microemulsion phase behaviour tests are carried out to screen surfactants for their potential to mobilize residual oil by means of lowering the interfacial tension (IFT) between the oil and water. Microemulsion phase behaviour was first described by Winsor in "Solvent properties of amphiphilic compounds", Butterworths, London, 1954. The following categories of emulsions were distinguished by Winsor: "type I" (oil-in-water emulsion), "type II" (water-in-oil emulsion) and "type III" (emulsions comprising a bicontinuous oil/water phase). A Winsor Type III emulsion is also known as an emulsion which comprises a so-called "middle phase" microemulsion. A microemulsion is characterised by having the lowest IFT between the oil and water for a given oil/water mixture.

For anionic surfactants, increasing the salinity (salt concentration) of an aqueous solution comprising the surfactant(s) causes a transition from a Winsor type I emulsion to a type III and then to a type II. Optimal salinity is defined as the salinity where equal amounts of oil and water are solubilised in the middle phase (type III) microemulsion. The oil solubilisation ratio is the ratio of oil volume (Vₒ) to neat surfactant volume (Vₛ) and the water solubilisation ratio is the ratio of water volume (V_{w}) to neat surfactant volume (Vₛ). The intersection of Vₒ/Vₛ and V_{w}/Vₛ as salinity is varied, defines (a) the optimal salinity and (b) the solubilisation parameter at the optimal salinity. It has been established by Huh that IFT is inversely proportional to the square of the solubilisation parameter (Huh, "Interfacial tensions and solubilizing ability of a microemulsion phase that coexists with oil and brine", J. Colloid and Interface Sci., September 1979, p. 408-426). A high solubilisation parameter, and consequently a low IFT, is advantageous for mobilising residual oil via surfactant EOR. That is to say, the higher the solubilisation parameter the more "active" the surfactant.

The detailed microemulsion phase test method used in these Examples has been described previously, by Barnes et al. under Section 2.1 "Glass pressure tube test" in "Development of Surfactants for Chemical Flooding at Difficult Reservoir Conditions", SPE 113313, 2008, p. 1-18. In summary, this test provides three important data:
(a) the optimal salinity;
(b) the solubilisation parameter (SP, in ml/ml) at the optimal salinity (this usually takes several days or weeks to allow the phases to settle at equilibrium), wherein the interfacial tension (IFT, in mN/m) is calculated from the solubilisation parameter using the "Huh" equation IFT=0.3/SP² as referred to above; and
(c) in addition, a measure of the "activity" of the microemulsion is obtained by the "sway test method" described below.

The original methodology for judging the quality of the emulsion in the microemulsion phase test when gently mixing oil and water by swaying tubes is described by Nelson et al. in "Cosurfactant-Enhanced Alkali Flooding", SPE/DOE 12672, 1984, p. 413-421 (see Table 1). This methodology has been further developed by Shell as the "sway test method" where the emulsion is visually judged in terms of four criteria:
(1) its homogeneity: the more homogeneous and "creamier", the better as this indicates a more effective oil emulsification;
(2) its mobility: the more mobile, the better;
(3) its colour: the lighter the colour, the better, indicative of microemulsions around the optimal salinity; and
(4) its glass wetting: a homogeneous film adhering to the glass surface is judged as good.

A rating method has been developed and a number ranging from 1 to 5 is given to overall microemulsion activity, from 5 for very high to 1 for very low or no activity.

The salinity of the aqueous solution containing the surfactant(s) is increased by adding salt, such as sodium chloride and/or sodium carbonate. The additional effect of adding sodium carbonate is that it neutralizes napthenic acids from the crude oil to make them function as natural soaps. Microemulsion phase behaviour tests may thus show the combined influence of these natural soaps and the "synthetic" surfactants in the formulation. However, since the Total Acid Number (TAN) values for the crude oils tested were quite low (0.1-0.2 mg KOH/g), the influence of the natural soaps was relatively modest.

### 3.2 Aqueous solubility

Aqueous solutions comprising the surfactant composition and having different salinities were prepared in tubes. The salinity was increased, up to and slightly beyond the optimal salinity, typically with increasing increments of 0.25 and/or 0.50% salinity. For each of said salinities, 2 identical aqueous solutions were prepared in separate tubes. One of these 2 tubes was kept at ambient temperature (about 20 °C), whereas the other tube was kept at the temperature used in the microemulsion phase behaviour test. All tubes were stored up to 7 days. At the end of the test, it was visually assessed whether or not there was any turbidity in the solution in the tube and/or any precipitation of a solid layer. Aqueous solutions that remained clear and bright and did not contain such precipitated layer, were found acceptable in terms of aqueous solubility.

A relatively high aqueous solubility is preferred when injecting the surfactant containing cEOR composition into an oil bearing formation. In case the aqueous solubility is relatively low, a visibly hazy or turbid solution might be formed which could cause plugging of the oil reservoir in question.

### 4. Examples

In Tables 1-4 below, the conditions and results of the 2 above-described evaluation tests are summarized for Examples 1-7 and for Comparison Examples 1-7.

In Examples 1-7, Surfactant A (in accordance with the invention) was used as the IOS, whereas in Comparison

### Examples 1-7, Comparison Surfactant B (not in accordance with the invention) was used as the IOS.

In Examples 1-5 and 7 and Comparison Examples 1-5 and 7, the salinity of the aqueous solution was varied by varying the NaCl concentration, only a single surfactant (A or B) was used and a co-solvent (IBA) was used in varying concentrations. In Example 6 and Comparison Example 6, said salinity was varied by varying the Na₂CO₃ concentration, a binary surfactant mixture was used (A and C; or B and C) and no co-solvent was used. However, the total surfactant concentration remained the same: 0.5 wt.%. Furthermore, the (phase behaviour test) temperature was different: 60 °C and 50 °C, respectively.

### Phase behaviour tests

The test results fall into two different sets: those for Examples 1-4 and 6-7 and Comparison Examples 1-4 and 6-7 (crude oils W, X1, X2 and Y) and those for Example 5 and Comparison Example 5 (crude oil Z).

The results for Examples 1-4 and 6-7 and Comparison Examples 1-4 and 6-7 show that for a relatively narrow range of salinities tested, a Winsor type III microemulsion having a high overall microemulsion activity, as determined by the above-described "sway test method", was observed. At these salinities, the rating for said microemulsion activity was 4, which means a high activity, except for in Examples 3 and 6, where it was even higher: rating of 4.5. Importantly, no viscous phases or gels were seen over the range of salinities tested showing that in these examples there was high activity and a good match of the surfactant systems with the crude oils W, X1, X2 and Y.

It can be seen from comparing the solubilisation parameter (SP) of a certain Example and the SP of the corresponding Comparison Example for Examples 1-4 and 6-7 and Comparison Examples 1-4 and 6-7 (for example, Example 1 and Comparison Example 1), in those cases where crude oil W, X1, X2 or Y was used, that the SP for the Example wherein Surfactant A was used was advantageously higher than the SP for the corresponding Comparison Example wherein Comparison Surfactant B was used.

A similar pattern can be seen in terms of IFT values because SP and IFT are correlated, as described above. When using crude oils W, X1, X2 and Y, the IFT in Examples 1-4 and 6-7 is consistently lower than in Comparison Examples 1-4 and 6-7, respectively. As described above, the measured asphaltenes content, as well as the asphaltenes to resins weight ratio, for crude oils W, X1, X2 and Y was relatively low as compared to crude oil Z. Further, for said 4 crude oils, the saturates to aromatics weight ratio was relatively high as compared to crude oil Z.

On the other hand, such pattern for SP and IFT as described above, could not be observed in Example 5 and Comparison Example 5 where crude oil Z was used. When using crude oil Z, a Winsor type III microemulsion could be obtained which however had a very low overall microemulsion activity. The rating for said microemulsion activity was at the lowest end of the rating scale: a rating of only 0.5. Furthermore, at most of the salinities tested there was only little sign of emulsification: that is to say, the oil and water phases were quite immiscible and quickly separated with time (indicated in Table 2 by "x"). This shows that the surfactant in question was not well matched to crude oil Z whereas it was very well matched to crude oils W, X1, X2 and Y having a relatively low asphaltenes content.

Therefore, in said cases where the asphaltenes content for the crude oil is relatively high, a Winsor type III microemulsion having a sufficiently high overall microemulsion activity cannot be obtained by using a surfactant containing composition in accordance with the invention. A high SP and low IFT cannot be obtained by using said surfactant containing composition in such cases.

In summary, from the test results it appears that "lower branched" surfactant containing compositions in accordance with the invention (like Surfactant A) are very well matched, in terms of (microemulsion) phase behavior (high SP, low IFT), to crude oils having a relatively low asphaltenes content, a relatively low asphaltenes to resins weight ratio and a relatively high saturates to aromatics weight ratio (like crude oils W, X1, X2 and Y), where a consistent advantage is seen, as compared to compositions containing the "higher branched" equivalent of that surfactant (like Comparison Surfactant B) .

### Aqueous solubility tests

Further, upon comparing the aqueous solubility test results, it can be seen that by adding a co-surfactant, such as Surfactant C in Example 6 and Comparison Example 6 (see Table 3), the aqueous solubility is further improved.

**Table 1**

| Example⁽¹⁾ | C1 | E1 | C2 | E2 | C3 | E3 | C4 | E4 |
|---|---|---|---|---|---|---|---|---|
| Surfactant, wt.% | B (0.5) | A (0.5) | B (0.5) | A (0.5) | B (0.5) | A (0.5) | B (0.5) | A (0.5) |
| Co-solvent, wt.% | 0.5 | 0.5 | 1. 0 | 1. 0 | 0.5 | 0.5 | 0.5 | 0.5 |
| Na₂CO₃, wt.% | 1.25 | 1.25 | 1.25 | 1.25 | 1.25 | 1.25 | 1.25 | 1.25 |
| Crude oil | X2 | X2 | X2 | X2 | X1 | X1 | Y | Y |
| Temperature,°C | 60 | 60 | 60 | 60 | 60 | 60 | 60 | 60 |
| NaCl, wt.%⁽²⁾ | | | | | | | | |
| 0.00 | II- | II- | | II- | II- | II- | II- | |
| 0.25 | II- | 111(4) | III (2) | 111(4) | II- | II- | II- | |
| 0.50 | III (4) | III/II+ | III (4) | III (3) | II- | III (4.5) | II- | II- |
| 0.75 | III/II+ | II+ | II+ | II+ | III (3) | III/II+ | II- | II-/III |
| 1.00 | II+ | II+ | II+ | II+ | III (4) | II+ | II- | III (4) |
| 1.25 | II+ | II+ | II+ | II+ | II+ | | II- | III (3) |
| 1.50 | II+ | II+ | II+ | II+ | II+ | II+ | III (4) | III/II+ |
| 1.75 | | | | | | | III (3) | |
| 2.00 | | | | | | | II+ | II+ |
| 2.50 | | | | | | | II+ | |
| 3.00 | | | | | | II+ | II+ | II+ |
| SP, ml/ml | 58 | 62 | 43 | 65 | 69 | 75 | 34 | 40 |

| Example ⁽¹⁾ | C1 | E1 | C2 | E2 | C3 | E3 | C4 | E4 |
|---|---|---|---|---|---|---|---|---|
| IFT, mN/m | 9x10⁻⁵ | 8x10⁻⁵ | 2x10⁻⁴ | 7x10⁻⁵ | 6x10⁻⁵ | 5x10⁻⁵ | 3x10⁻⁴ | 2x10⁻⁴ |
| Solubili ty⁽³⁾ | +/- | +/- | +/- | +/- | +/- | +/- | +/- | +/- |

| | | | | | | | | |
|---|---|---|---|---|---|---|---|---|
| (1) "E" = Example; "C" = Comparison Example. In this table, weight percentages are based on total weight of the aqueous solution (only). (2) Phase behaviour was tested at various NaCl concentrations (salinities) at the stated temperature. "II-", "III" and "II+" refer to emulsion (Winsor) types "I", "III" and "II", respectively, as described above. The phase behaviour activity determined in cases where the emulsion type was "III" only (i.e. overall microemulsion activity as described above) was rated as follows: "5" = very high; "4" = high; "3" = medium; "2" = low; "1" = very low or no activity. (3) "Solubility" refers to aqueous solubility, which is described above and which was rated as follows: +/- = moderate solubility; + = good solubility. | | | | | | | | |

**Table 2**

| Example⁽¹⁾ | C5 | E5 |
|---|---|---|
| Surfactant, wt.% | B (0.5) | A (0.5) |
| Co-solvent, wt.% | 0.5 | 0.5 |
| Na₂CO₃, wt.% | 1.25 | 1.25 |
| Crude oil | Z | Z |
| Temperature,°C | 60 | 60 |
| NaCl, wt.%⁽²⁾ | | |
| 0.00 | x | X |
| 0.50 | x | X |
| 1.00 | x | X |
| 1.50 | x | X |
| 2.00 | II- | III (0.5) |
| 2.50 | III (0.5) | III (0.5) |
| 4.00 | x | X |
| SP, ml/ml | (3) | (3) |
| IFT, mN/m | (3) | (3) |
| Solubility | +/- | +/- |

| | | |
|---|---|---|
| n.a. = not applicable (1) Reference is made to the notes under Table 1 which are also applicable to Table 2. (2) "x" means that there was little sign of emulsification: that is to say, the oil and water phases were quite immiscible and quickly separated with time. (3) No "middle phase" microemulsion was formed. Therefore, SP could not be measured and IFT could not be calculated. | | |

This indicates a high IFT.

**Table 3**

| Example ⁽¹⁾ | C6 | E6 |
|---|---|---|
| Surfactant, wt.% | B (0.4) | A (0.4) |
| Co-surfactant, wt.% | C (0.1) | C (0.1) |
| Crude oil | X1 | X1 |
| Temperature,°C | 50 | 50 |
| Na₂CO₃, wt.% | | |
| 0.00 | II- | II- |
| 0.50 | II- | II- |
| 1.00 | II- | II-/III |
| 1.50 | II- | III (1) |
| 2.00 | II- | III (4.5) |
| 2.50 | III (4) | II+ |
| 3.00 | II+ | II+ |
| SP, ml/ml | 55 | 63 |
| IFT, mN/m | 1x10⁻⁴ | 8x10⁻⁵ |
| Solubility | + | + |

| | | |
|---|---|---|
| (1) Reference is made to the notes under Table 1 which are also applicable to Table 3, except that phase behaviour was tested at various Na₂CO₃ concentrations. | | |

**Table 4**

| Example⁽¹⁾ | C7 | E7 |
|---|---|---|
| Surfactant, wt.% | B (0.5) | A (0.5) |
| Co-solvent, wt.% | 0.5 | 0.5 |
| Na₂CO₃, wt.% | 1.25 | 1.25 |
| Crude oil | W | W |
| Temperature,°C | 60 | 60 |
| NaCl, wt.% | | |
| 0.00 | II | II |
| 0.25 | II | II |
| 0.50 | II | III (4) |
| 0.75 | II | III (4) |
| 1.25 | III (4) | III (1) |
| 1.75 | III/II+ | III/II+ |
| 2.00 | II+ | II+ |
| 2.50 | II+ | II+ |
| SP, ml/ml | 20 | 40 |
| IFT, mN/m | 8x10⁻⁴ | 2x10⁻⁴ |
| Solubility | +/- | +/- |

| | | |
|---|---|---|
| (1) Reference is made to the notes under Table 1 which are also applicable to Table 4. | | |

## Claims

1. A method of treating a hydrocarbon containing formation, wherein the hydrocarbon containing formation is a crude oil-bearing formation wherein the amount of asphaltenes in the crude oil is of from 0.001 to 6 wt.%, based on total crude oil composition, comprising:
(a) providing a composition to at least a portion of the hydrocarbon containing formation, wherein the composition comprises water and an anionic surfactant which is an internal olefin sulfonate (IOS), which has a weight ratio of branched IOS molecules to linear IOS molecules which is of from 0.1:99.9 to 8:92, wherein the average carbon number for the IOS is 17 to 26, wherein the branching index of the IOS is of from 0.01 to 0.5, wherein the branching index is the total number of branches divided by the total number of molecules, and wherein the IOS comprises from 40% to 95% hydroxyalkane sulfonate molecules, from 5% to 50% alkene sulfonate molecules and from 0% to 10% di-sulfonate molecules; and
(b) allowing the composition to interact with the hydrocarbons in the hydrocarbon containing formation.

2. The method of claim 1 wherein the weight ratio of branched IOS molecules to linear IOS molecules is of from 1:99 to 8:92, and preferably of from 2:98 to 7:93.

3. The method of claim 1 or 2 wherein the branches in the branched IOS molecules include 10 to 40% of methyl branches, 20 to 50% of ethyl branches and 30 to 60% of other branches.

4. The method of any one of the preceding claims wherein the branching index of the IOS is of from 0.1 to 0.5.

5. The method of any one of the preceding claims wherein the composition comprises an additional anionic surfactant which is based on an alkoxylated primary alcohol having an aliphatic group, and wherein the additional anionic surfactant is of the following formula (II)
(II) [R-O-[R'-O]ₓ-A^{m-}][Mⁿ⁺]ₒ
wherein R is the aliphatic group originating from the alcohol, R'-O is an alkylene oxide group originating from an alkylene oxide, x is at least 0.5, A is a negatively charged group, M is a counter cation and the product of n and o (n*o) equals m.

6. The method of any one of the preceding claims wherein the hydrocarbon containing formation is a crude oil-bearing formation wherein the amount of asphaltenes in the crude oil is of from 0.01 to 6 wt.%, based on total crude oil composition.

7. A hydrocarbon recovery composition which comprises the composition as described in any one of claims 1-5.

## Patentansprüche

1. Verfahren zum Behandeln einer Kohlenwasserstoff enthaltenden Ausbildung, wobei die Kohlenwasserstoff enthaltende Ausbildung eine Erdöl tragende Ausbildung ist, wobei die Menge von Asphaltenen in dem Erdöl von 0,001 bis 6 Gew.-% bezogen auf die Gesamterdölzusammensetzung beträgt, Folgendes umfassend:
(a) Bereitstellen einer Zusammensetzung an wenigstens einen Teil der Kohlenwasserstoff enthaltenden Ausbildung, wobei die Zusammensetzung Wasser und ein anionisches Tensid umfasst, das ein internes Olefinsulfonat (*internal olefin sulfonate* - IOS) ist, das ein Gewichtsverhältnis von verzweigten IOS-Molekülen zu linearen IOS-Molekülen aufweist, das von 0,1:99,9 bis 8:92 beträgt, wobei die durchschnittliche Kohlenstoffzahl für das IOS 17 bis 26 beträgt, wobei der Verzweigungsindex des IOS von 0,01 bis 0,5 beträgt, wobei der Verzweigungsindex die Gesamtzahl von Verzweigungen geteilt durch die Gesamtzahl von Molekülen ist und wobei das IOS 40 % bis 95 % Hydroxyalkansulfonatmoleküle, 5 % bis 50 % Alkensulfonatmoleküle und 0 % bis 10 % Disulfonatmoleküle umfasst; und
(b) Ermöglichen, dass die Zusammensetzung mit den Kohlenwasserstoffen in der Kohlenwasserstoff enthaltenden Ausbildung zusammenwirkt.

2. Verfahren nach Anspruch 1, wobei das Gewichtsverhältnis von verzweigten IOS-Molekülen zu linearen IOS-Molekülen von 1:99 bis 8:92, und vorzugsweise von 2:98 bis 7:93 beträgt.

3. Verfahren nach Anspruch 1 oder 2, wobei die Verzweigungen in den verzweigten IOS-Molekülen 10 bis 40 % Methylverzweigungen, 20 bis 50 % Ethylverzweigungen und 30 bis 60 % anderer Verzweigungen beinhalten.

4. Verfahren nach einem der vorhergehenden Ansprüche, wobei der Verzweigungsindex des IOS 0,1 bis 0,5 beträgt.

5. Verfahren nach einem der vorhergehenden Ansprüche, wobei die Zusammensetzung ein zusätzliches anionisches Tensid umfasst, das auf einem alkoxylierten primären Alkohol mit einer aliphatischen Gruppe basiert, und wobei das zusätzliche anionische Tensid die folgende Formel (II) aufweist
(II) [R-O-[R'-O]ₓ-A^{m-}] [Mⁿ⁺]ₒ
wobei R die aliphatische Gruppe ist, die von dem Alkohol stammt, R'-O eine Alkylenoxidgruppe ist, die von einem Alkylenoxid stammt, x wenigstens 0,5 ist, A eine negativ geladene Gruppe ist, M ein Gegenkation ist und das Produkt von n und o (n*o) m ergibt.

6. Verfahren nach einem der vorhergehenden Ansprüche, wobei die Kohlenwasserstoff enthaltende Ausbildung eine Erdöl tragende Ausbildung ist, wobei die Menge von Asphaltenen in dem Erdöl 0,01 bis 6 Gew.-% bezogen auf die Gesamterdölzusammensetzung beträgt.

7. Kohlenwasserstoffrückgewinnungszusammensetzung, die die Zusammensetzung nach einem der Ansprüche 1-5 umfasst.

## Revendications

1. Procédé de traitement d'une formation contenant des hydrocarbures, la formation contenant des hydrocarbures étant une formation contenant du pétrole brut dans laquelle la quantité d'asphaltènes dans le pétrole brut est de 0,001 à 6 % en poids, sur la base de la composition totale du pétrole brut, consistant à :
(a) introduire une composition dans au moins une partie de la formation contenant des hydrocarbures, la composition comprenant de l'eau et un tensioactif anionique qui est un oléfinesulfonate interne (IOS), qui présente un rapport pondéral des molécules IOS ramifiées sur les molécules IOS linéaires de 0,1:99,9 à 8:92, où le nombre moyen d'atomes de carbone pour l'IOS est compris entre 17 et 26, l'indice de ramification de l'IOS étant compris entre 0,01 et 0,5, l'indice de ramification étant le nombre total de ramifications divisé par le nombre total de molécules, et dans lequel l'IOS comprend de 40 % à 95 % de molécules d'hydroxyalcane sulfonate, de 5 % à 50 % de molécules d'alcènesulfonate et de 0 % à 10 % de molécules de disulfonate ; et
(b) laisser la composition interagir avec les hydrocarbures dans la formation contenant des hydrocarbures.

2. Procédé selon la revendication 1, dans lequel le rapport en poids des molécules d'IOS ramifiées sur les molécules d'IOS linéaires est de 1:99 à 8:92, et de préférence de 2:98 à 7:93.

3. Procédé selon la revendication 1 ou 2, dans lequel les ramifications dans les molécules IOS ramifiées comprennent 10 à 40 % de ramifications méthyle, 20 à 50 % de ramifications éthyle et 30 à 60 % d'autres ramifications.

4. Procédé selon l'une quelconque des revendications précédentes, dans lequel l'indice de ramification de l'IOS est compris entre 0,1 et 0,5.

5. Procédé selon l'une quelconque des revendications précédentes, dans lequel la composition comprend un tensioactif anionique supplémentaire qui est à base d'un alcool primaire alcoxylé comportant un groupe aliphatique, et dans lequel le tensioactif anionique supplémentaire est représenté par la formule suivante (II)
(II) [R-O-[R'-O]ₓ-A^{m}-][Mⁿ⁺]ₒ
dans laquelle R représente le groupe aliphatique provenant de l'alcool, R'-O représente un groupe oxyde d'alkylène provenant d'un oxyde d'alkylène, x vaut au moins 0,5, A représente un groupe chargé négativement, M représente un contre-cation et où le produit de n et de o (n*o) est égal à m.

6. Procédé selon l'une quelconque des revendications précédentes, dans lequel la formation contenant des hydrocarbures est une formation contenant du pétrole brut dans laquelle la quantité d'asphaltènes dans le pétrole brut est de 0,01 à 6 % en poids, par rapport à la composition totale de pétrole brut.

7. Composition de récupération d'hydrocarbures qui comprend la composition telle que décrite dans l'une quelconque des revendications 1 à 5.
